# EUROPEAN PATENT SPECIFICATION

(11) **EP 3 521 768 B1**
(45) Date of publication and mention of the grant of the patent: **10.03.2021**
(21) Application number: 19154637.3
(22) Date of filing: 30.01.2019
(51) Int. Cl.: G01D 11/24, G01K 1/14

(54) **SENSOR MODULE AND PACKAGE**
SENSOR-MODUL UND GEHÄUSE
MODULE DE CAPTEUR ET EMBALLAGE

(30) Priority: 01.02.2018 BE 201805062
(43) Date of publication of application: 07.08.2019
(73) Proprietor: Niko NV, 9100 Sint-Niklaas (BE)
(72) Inventor: DE BRABANDER, Gino, 9112 Sinaai (BE)
(74) Representative: DenK iP bv

(56) References cited:
- EP-A2- 2 749 855
- KR-B1- 101 796 199
- US-A1- 2013 145 844
- US-A1- 2018 172 520

## Description

### Field of the invention

The present invention relates to the field of sensors. More specifically it relates to sensor modules, packages for protecting sensor modules, and packaged sensor modules.

### Background of the invention

Environmental controllers usually require sensing a parameter or a set thereof at a particular location. For example, environmental controlling may include sensing occupancy of a location such as a room in order to automatically switch on lights; or sensing the temperature of a location and possibly activating a heating or cooling system as a response, in case the sensed temperature is outside a predetermined margin. For example, a thermostat is a typical implementation of an environmental controller that is used to control temperature at a location (in a room, in a car, etc.). In order to do this, temperature may be sensed, but also other parameters may also be measured, such as illumination, for instance.

Despite the need of providing sensing elements, and preferably more than one, in most cases it is preferred that the sensor itself is compact, not only for aesthetic reasons, but also to reduce footprint and to reduce obstructions of occupants of the location. Existing sensors are included in a package which is usually embedded in a surface (e.g. a wall, a ceiling, a column, etc.) of the location, so it does not occupy physical space in the location. Although this eliminates obstacles in the location and may also provide concealment, it greatly limits the layout of the device. If the device is large, the hole where the sensor package is installed should also be accordingly large, which requires a cumbersome installation, and it can even compromise at least some functions of the surface (e.g. isolation, structural support, etc.). Thus, due to the limitations of space, there is a trade-off between the positioning of the sensing element and the distribution of the electronics elements. As a result of this trade-off, the sensing element usually cannot be placed in the optimal position, next to or inside the location to be sensed. This usually results in sensing with low accuracy. In order to improve sensor placement, the sensing elements and signal processing circuitry can be made small. However, this negatively affects the sensitivity and/or resolution of the sensor, and it may increase drift.

Moreover, because of the limited space, sensing can be affected by the presence of other sensing elements nearby and especially by the heat produced by the electronic components of the sensor. This further reduces sensitivity and accuracy. For example, in wall-mounted devices, heat cannot be evacuated through the rear of the device if it is installed in an insulated box and/or inside a surface because these usually have insulating properties; therefore, the heat tends to be dissipated at the front of the device, where the sensing element is usually placed, thus affecting sensing. Increasing the distance between the sensing element and the electronic components is an option limited by the thickness of the surface in which the sensor package is mounted, or by the compactness requirement, or by both.

For example, document EP2749855A2 discloses a multi-function sensor for sensing temperature and pressure, where the temperature sensor is provided on a temperature arm in a protrusion for sampling the environment, distal from its supporting electronics and including a flexible return. However, there may be thermal influence through the return, and the required protrusion is a trade-off with compactness.

Some medical devices, such as the one disclosed in document KR101796199B1, provide a solution to the dissipation by providing a sensor patch at one side of a flexible layer and a connection to a housed module. However, the sensor patch needs to be fixed somehow to the area from which the reading of temperature is required, usually by adhesive, and the problem of thermal influence between the electronics and the sensor patch persists.

### Summary of the invention

It is an object of embodiments of the present invention to provide a sensor module and an external package, as well as a compact packaged sensor including a sensing element which can be positioned so that sensing is good, including providing thermal insulation from other elements and circuitry of the packaged sensor.

In a first aspect, the present invention comprises a sensor module. The sensor module includes at least one sensing element for providing a signal as a response to a measurement of a parameter from a location, and electronic circuitry for processing said signal. The sensor module further comprises a flexible substrate comprising the at least one sensing element. The flexible substrate is adapted to increase the length of a thermal path between the sensing element and the electronic circuitry.

It is an advantage of embodiments of the present invention that insulation between the sensing element and the electronic circuitry can be tailored and increased with no need to increase the size of the package.

In some embodiments, the at least one sensing element of the sensor module is a temperature sensing element.

It is an advantage of embodiments of the present invention that heat produced by the electronic circuitry does not affect temperature sensing, which improves the measurement sensitivity and accuracy.

In a further aspect, the present invention includes a packaged sensor module for sensing a location parameter in a sensing zone. The packaged sensor module includes a sensor module in accordance with embodiments of the first aspect of the present invention in a sensor package. The packaged sensor module comprises holding means holding the at least one sensing element, provided on the flexible substrate, in the sensing zone, so that the location parameter can be directly sensed by the sensing element.

It is an advantage of embodiments of the present invention that sensing element can be held securely against or adjacent the location to be measured or sensed and with very low or no influence from the heat-generating parts of the sensor, which improves accuracy and sensitivity.

In some embodiments of the packaged sensor module, the holding means is or are adapted for holding the flexible substrate with the sensing element so that the thermal path between the sensing element and the electronic circuitry is as large as possible.

In some embodiments of the packaged sensor module, the sensor package comprises at least a structural element housing said sensor module and comprising the holding means.

It is an advantage of embodiments of the present invention that mechanical protection and compact packaging can be provided.

The sensor package of the packaged sensor module further comprises an insulating barrier separating a portion of the structural element housing the sensing element from a portion of the structural element housing the electronic circuitry for processing signals.

It is an advantage of embodiments of the present invention that insulation between the sensing element and electronic circuitry can be further increased.

In particular embodiments of the present invention, this insulating barrier comprises a chamber enclosing air.

It is an advantage of embodiments that the insulation can be provided in an inexpensive way.

In some embodiments of the present invention including a structural element as described above, the structural element is a housing adapted for being attached to a constructional surface.

It is an advantage of embodiments of the present invention that installation is facilitated

In a further aspect, the present invention includes a sensor package for providing mechanical protection to a sensor module for measuring parameters from a location. The sensor package includes at least one structural element comprising holding means for holding a flexible substrate in a fixed position, so a relevant parameter can be directly sensed by a sensing element included on the flexible substrate

It is an advantage of embodiments of the present invention that a box can provide a sensing zone in direct contact with the region to be sensed, while at the same time it can protect the electronic components of a sensor.

In some embodiments of the present invention, the holding means comprises a slot in a wall of the package for reducing heat transfer between the sensor package and a thereby held flexible substrate.

It is an advantage of embodiments of the present invention that the temperature of the package or box has a negligible influence or no influence at all on the measurement.

In some embodiments, the sensor package comprises a bezel including a window for allowing passage to a sensing element of the relevant parameter to be sensed.

It is an advantage of embodiments of the present invention that protection to an exposed sensing element is provided.

The sensor package comprises an insulating barrier for providing thermal insulation between at least two subdivisions of the sensor package.

It is an advantage of embodiments of the present invention that the sensor package or box itself may provide thermal insulation between any sensitive sensing element and heat generating parts (e.g. circuitry) of the sensor.

In some embodiments of the present invention, the at least one structural element of the sensor package is adapted for holding a sensor module and it further includes positioning and fixation features for holding at least a rigid substrate of a sensor module, said features adapted to reduce heat transfer between the rigid substrate and the housing.

It is an advantage of embodiments of the present invention that further thermal insulation is provided by reducing, e.g. minimizing, the thermal transfer between the package itself and the sensor module.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates a sensor module in accordance with embodiments of the present invention.
FIG 2 illustrates a flexible substrate for a sensor module in accordance with embodiments of the present invention.
FIG 3 illustrates a partially assembled packaged sensor, comprising a sensor module in accordance with embodiments of the present invention, included in a structural element of a sensor package.
FIG 4 illustrates a zoomed-in portion of a partially assembled packaged sensor, showing details of a sensing zone.
FIG 5 is an exploded view of a packaged sensor in accordance with some embodiments of the present invention.
FIG 6 shows a structural element of the sensor package in accordance with embodiments of the present invention.
FIG 7 shows a front and a back view of a sensor package in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be not drawn on scale for illustrative purposes. The dimensions and the relative dimensions do not correspond to actual reductions to practice of the invention.

The terms first, second and the like in the description and in the claims are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is to be understood that embodiments of the invention may be practiced without these specific details. In other instances, well-known methods, structures and techniques have not been shown in detail in order not to obscure an understanding of this description.

Where in embodiments of the present invention reference is made to a "location parameter" or a "relevant parameter", reference is made to parameters that can be measured directly at a location, including for example environmental parameters such as humidity and temperature, but not limited to these. For example, a location parameter may include the occupancy level of a room, or the illumination or noise level. The measurement of these parameters may be performed with any suitable sensing element, which can generate a signal or a change thereof as a response to the sensed parameter.

Usually, a sensor comprises at least one sensing element which generates an electric signal as a response to a stimulus (heat, humidity, light, etc.). The signal is processed in order to provide an output or reading, which can be used in a further system, such as a display or a controller (e.g. thermostat, HVAC systems, etc.). In order to process the signal, electronic circuitry and energy are required. However, the circuitry dissipates energy during powering and use, in the form of heat. This heat can negatively affect the sensing element, for example, due to dilatation or change of other properties directly or indirectly due to the exposure to heat from the circuitry. The effect on the sensing element of being subjected to heat from the circuitry may be bigger that the effect of the stimulus under measurement to which the sensing element is being exposed. This is a big hurdle in the specific case of temperature sensors, because this way its measurement becomes greatly affected by the heat from the circuitry of the sensor itself.

The present invention provides a sensing system (a sensor module and a package) which solves this problem by increasing the length of the thermal path and the level of insulation between the heat-generating elements (circuitry) and the sensing element, rather than by increasing the physical distance between the sensing element and the circuitry, thus sacrificing compactness of the device. Hereto, a substrate which is substantially deformable (or "flexible") includes the sensing element. The flexible substrate improves and facilitates the positioning of the sensing element. In some embodiments, the package provides additional insulation between the sensing element and heat generating components. Moreover, the sensing element can be placed directly at the location where the relevant parameter is to be measured, without increasing the size of the sensor package. The present invention can be applied to sensing of one or more parameters (humidity, temperature, etc.) at any location, for example an enclosed location such as a room, a vehicle cabin, etc., or an open location. In general, the present invention can improve sensing of any sensor which may have the sensing accuracy influenced by heat.

By "flexible substrate" it is understood a substrate including materials adapted to give the substrate the ability to be substantially deformed without putting its structural integrity at risk (e.g. without breaking or tearing). It may comprise one or more materials, for example flexible ceramics, flexible polymers like for instance polyimide or polyester films, and resins, ductile conductors (e.g. metals), and/or semiconductors, such as thinned or micro-fabricated semiconductors, such as flexible silicon, so the substrate can substantially bend. The flexible substrates may be printed with conductive, semi-conductive and/or resistive inks to provide connections between the sensing element and components on or external to the flexible substrate.

In a first aspect, a sensor module in accordance with embodiments of the present invention is disclosed, including electronic circuitry for signal processing and/or powering, and a sensing element provided on a flexible substrate.

In particular, the flexible substrate allows good, e.g. optimal, positioning of the sensing element, for example adjacent to the location or inside the location where a parameter is to be sensed. Substrate flexibility allows increasing the length of the thermal path between the sensing element and sensor circuitry required for functioning of the sensing element to a great deal without sacrificing the compactness of the sensor module (and, thus, of the sensor package). The freedom this flexibility provides allows providing a large space for insulation, which can be used to fit further elements, such as extra sensors.

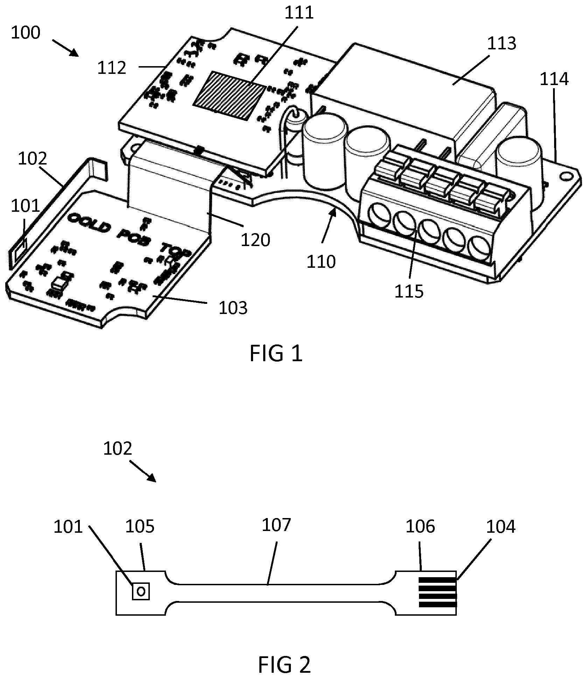

FIG 1 shows a sensor module 100 in accordance with embodiments of the present invention, including a flexible substrate 102 with at least one sensing element 101, and electronic circuitry 110 for processing signals obtained from the at least one sensing element 101. The sensor module 100 can be included in a sensor package. The sensing element 101 may be for sensing an environmental parameter, such as for instance heat, humidity, gas concentration, light, etc. The flexible substrate 102 may be attached to a supporting substrate 103, further called intermediate sensor substrate, for instance a PCB. This supporting substrate 103 is generally indicated as a cold substrate, as preferably it does not carry any heat generating elements, or if it does, then it only carries elements with limited heat dissipation. The electronic circuitry 110 may include for example a processing unit 111 for processing signals generated by the sensing element, which generally generates heat. The processing unit 111 may be included in or on a substrate 112 such as a regular PCB. Additionally, powering elements 113 may be included in the electronic circuitry 110, for example on a separate substrate 114 such as a further PCB. These powering elements 113 further contribute to heat generation. Other elements may be included on either of these substrates, for example contacts 115 for providing electrical connection with an outlet, and/or output of measurements.

Due to the freedom of design provided by the flexible substrate 102, thermal insulation between the sensing element 101 and the electronic circuitry 110 can be very high. Although the material forming the flexible substrate 102 may have a similar thermal conductance as a rigid PCB, the shape of the flexible substrate can be easily adapted, so the resulting thermal conductivity can be lower than a typical PCB with the same area and/or volume. For example, the flexible substrate may be made much thinner than a rigid PCB, which improves thermal insulation by several tens of Celsius degrees.

FIG 2 shows an exemplary flexible substrate 102, with an elongated shape. A sensing element 101 (e.g. a sensor) is placed at one extremity, and contact pads 104 (e.g. copper pads) at the opposite extremity. Conductive tracks or wiring (not shown), which may be flexible, provide electric contact between the sensing element 101 and the contact pads 104. The tracks or wiring may be embedded within the flexible substrate 102 or provided on its surface. In the figure, the substrate includes a central narrow portion along the length, which improves thermal insulation between the contact pads 104 and the sensing element 101. Exemplary dimensions of such substrate may be for example a maximum width of about 4.5 mm (at the extremal, wide portions 105, 106), and a width in the narrow portion of about 2 mm. The length of the wide extremal portions 105, 106 including the sensor 101 and the contact pads 104 may be about 8 mm and 5.5 mm respectively, and the length of the narrow portion 107 may be about 46.5 mm, for a total length of the flexible substrate 102 of about 60 mm. The thickness of the substrate may be about 0.2 mm. Of course, these dimensions may be adapted to the particular design of the device. In other embodiments, the substrate may be a simple strip with constant width, i.e. with no narrowing in the center.

Coming back to the discussion of FIG 1, the inclusion of a flexible substrate 102 may further improve routing, while still using rigid substrates (e.g. standard PCB) for at least the electronic circuitry 110, which have an inexpensive and well-known manufacturing process. Electric contact and communication between the flexible substrate 102 and the circuitry 110 may be provided by connections 120 including flexible conducting means such as flexible tracks, wiring, flatcable, etc. In some embodiments, the connections 120 are directly provided on the flexible substrate 102, for example directly on the contact pads 104. In some embodiments, an intermediate sensor substrate 103 is included between the connections 120 and the flexible substrate 102, for example the substrate may be connected to the flexible substrate 102 and to the connections 120. The intermediate substrate 103 may be a rigid substrate, e.g. a standard PCB, and may optionally include components for signal routing and/or processing which have a very low heat dissipation (for example, a heat dissipation under 100 mW) or which do no dissipate any heat at all. Hence, the flexible substrate 102 may not need to harbor further elements aside of the sensing element 101 and conductive tracks and pads, so the shape and area of the flexible substrate 102 may be adapted so it only provides the area needed by the essential elements (e.g. the sensing element, e.g. conductive tracks) while any other further elements may be included in the rigid intermediate substrate 103. This reduces production costs.

In some embodiments, the flexible substrate 102 may comprise polyimide, PEEK, conductive polyester, etc. For example, the substrate may be for example a flexible PCB.

In some embodiments of the present invention, the sensing element 101 is a temperature sensing element, which can be advantageously thermally insulated from the heating produced by the circuitry 110 of the sensor. For example, the temperature sensing element may be a thermistor, an IR sensor, etc. For example, it may be a CMOS-implemented temperature sensing element, for example with delta Vbe architecture, which is advantageous in case the heat generation is not constant (for instance, due to duty cycling of microcontroller, sleep modes, etc.).

However, the present invention is not limited to temperature sensing elements. For example, in embodiments of the present invention, humidity sensing elements and/or illumination sensing elements, and even microphones, can be included, which can also be negatively affected by heat from the circuitry.

In a second aspect, a packaged sensor is provided, including the sensor module of the first aspect of the present invention, and at least a structural element.

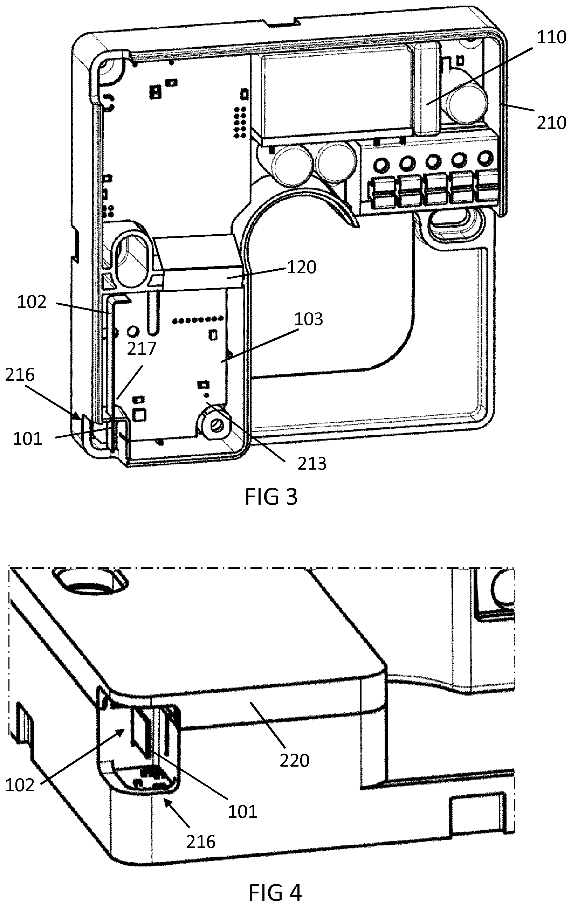

For example, FIG 3 shows a housing 210 of a sensor package 200 and a sensor module 100 in accordance with embodiments of the first aspect of the present invention included therein. The housing 210 of the sensor package 200 provides to the sensor module 100:
- direct measurement at the location where an environmental parameter needs to be sensed,
- thermal insulation between the heat-generating parts of the sensor module 100 and the parts of the sensor module 100 which do not generate heat or which generate a negligible amount of heat, including the sensing element 101,
- means to hold the flexible substrate 102,
- protection and structural support,
- optionally, a heat sink.

The sensing element 101 is included in or on at least a portion (e.g. a distal portion) of the flexible substrate 102, and at least the sensing element 101 (and optionally also the portion of the flexible substrate 102 including it) is kept in place in a sensing zone 216 of the housing 210, for example by holding means 217. The holding means can be any suitable means to keep the flexible substrate 102 and in particular the sensing element 101 in place, such as for instance a clip, or a slit snuggly fitting around the flexible substrate 102.

In some embodiments, the sensing zone 216 is a region not completely surrounded by walls of the sensor package, thereby allowing direct contact between the air at the location to be sensed and the sensing element 101. However, the present invention is not limited to this. For example, the sensing zone may be completely included in the housing 210, and the phenomenon to be sensed (e.g. infrared radiation) can be provided to the sensing element 101 through a window (e.g. a window transparent to IR radiation). Thus, optimal sensor position can be beneficial to other types of sensors such as illumination, audio, PIR sensors.

Thanks to the flexibility of the substrate 102, the sensing element 101 can be positioned and securely held at the location where measurements are to be made, so these measurements can be obtained directly from said location, with no restrictions with respect to the position, shape or size of the package. Preferably, the flexible substrate 102 allows increasing the thermal path length from the heat-generating electronic circuitry 110, for example by providing connection to the circuitry 110 distant from the sensing element 101. The thermal path length can be optimized, e.g. maximized, for a given length or size of the flexible substrate 102, for example by varying its shape including corners, zig-zags, etc. In a traditional rigid substrate, the thermal path length depends on the configuration of the substrate, so the design of the package or of the substrate needs to be adapted, which is costly and in many cases not feasible.

Although the sensing zone 216 represented in FIG 3 is shown in a corner of the housing 210, its position can be optimized in accordance with design requirements or particular applications (e.g. it could be positioned under a housing shaped for reducing or avoiding water leaking into the sensing element, for example for outdoor use).

The present invention overcomes the hurdles of typical rigid substrates, such as laminates for printed circuit boards (PCBs), which need a complex setup, and the limited space for installation which does not allow a proper thermal insulation between the circuitry and the sensing element. Providing the sensing element 101 on a flexible substrate 102 allows a compact configuration of the different parts of the sensor module 100, while also sensing the location parameter (e.g. temperature) in-situ. Despite being compact, insulation does not need to be sacrificed, so the influence of the heat generated by the sensor's circuitry 110 on the sensing element 101 is negligible.

On top of the long thermal path provided by the flexible substrate 102, in embodiments of the present invention, the part of circuitry 110 which generates most heat (in this case, e.g. the powering elements 113) may be placed farthest from the sensing element 101 in the sensor package 200, and on a different substrate 114 than the processing unit 111, thus increasing the thermal path to the sensing element 101 still more. The substrate 112 including the processing unit 111 (which generally dissipates less heat than e.g. the powering elements 113) is placed physically between the powering elements 113 and the sensing element 101.

In embodiments of the present invention, additional thermal insulation may be provided by buffer material, forming an insulating barrier 214, between two areas of the sensor package 200. The sensor package 200 is thus subdivided in compartments, for example at least one "hot" compartment 211 or subdivision, for containing any heat-generating electronic circuitry, and a different, separate "cold" compartment 212 or subdivision, for containing any element sensitive to temperature (which may generate no heat or a negligible amount thereof), for example the one or more sensing elements 101. This way, although heat may be generated in the electronic circuitry 110, the buffer material provides insulation between the subdivisions (also called compartments) 211, 212, so the heat does not affect the sensing element 101, while electric contact can still be provided via connections 120 (for example by flexible materials).

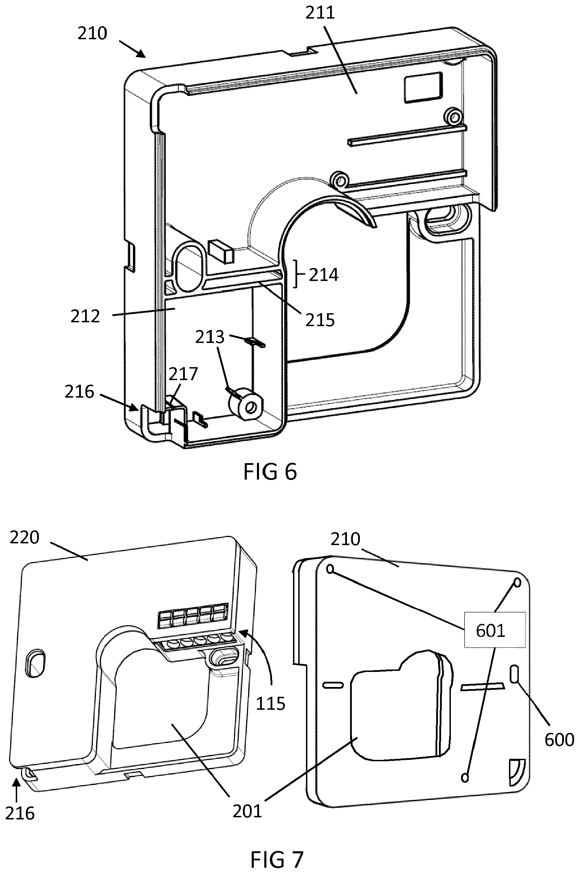

In the embodiment shown in FIG 3, the thermally insulating barrier 214 is covered by the connections 120, specifically a flatcable, provided between the "hot" compartment 211 and the sensing element 101. More details of the insulating barrier can be found below with reference to FIG 6.

Although the "cold" compartment 212 holds at least the sensing element attached to the flexible substrate, the "hot" compartment 211 including electronic circuitry 110 may include also sensors, for example sensors which are less affected by temperature (e.g. position sensors, etc).

In embodiments of the present invention, the intermediate substrate 103 (e.g. sensor PCB) may be fixed to the housing 210 by positioning and fixation features 213. Advantageously, the positioning and fixation features 213 may minimize the thermal contact between the intermediate substrate 103 and the housing 210, so any transfer of heat between the housing 210 and the rigid sensor substrate 103 (and, thus, from the rigid sensor substrate 103 to the flexible substrate 102 and to the sensing element 101) is kept minimal. In particular embodiments of the present invention, protrusions, tabs and/or ribs ('crash ribs') can be used to hold the intermediate substrate 103 in place. For example, the material of these fixation features may include insulating material, or they may provide a contact area small enough so the transfer of heat is negligible.

Further protrusions (not pictured) may be provided for positioning the flexible substrate 102 and may help holding the sensing element 101 at the location where the parameter is to be sensed. These protrusions may be anchored or attached to the package, or molded from the housing 210.

The heat generated in the sensor package 200 can be drained through the housing 210, for example towards a wall on which the sensor package 200 is mounted. Additionally or alternatively, the drained heat can be sampled with an IR temperature sensor, which may also be included in the package, or which may be an external sensor.

However, the present invention is not limited to this, and the sensor package 200 may be adapted to drain the (mostly internally generated) heat through a different sink (e.g. the front of the sensor package 200), away from the sensing element 101. In some embodiments, the sensor package 200 may be embedded in a wall, protruding sufficiently to provide good sensing, so the sensing zone 216 can properly probe the location.

FIG 4 shows a specific embodiment of the sensing zone 216, being delimited by walls of the housing 210 and of a cover 220.

A distal portion of the flexible substrate 102 including the sensing element 101 is being held and kept in place by holding means 217, for example holding means attached to or included in the housing 210, such as a slot in an external wall of the housing 210. The present invention is not limited to this embodiment, and the holding means 217 may be a rib attached to or being held against the package, or even a slot included in a tab protruding from the cover, instead of the housing.

In some embodiments, the sensing zone 216 is a region not completely surrounded by the walls of the package (e.g. housing 210), thereby allowing direct contact between the air at the location and the sensing element 101. Thus, the sensing element 101 is only partially surrounded by the walls of the housing 210 in the sensing zone 216. Some effects of this configuration are:
- a further increase of insulation of the sensing element 101 from any heat generated in the electronic circuitry 110 and confined completely within the housing,
- the sensing element 101 is allowed to directly probe the sample at the location.

For example, the air at the location can be in direct contact with the sensing element 101, so the temperature of the location can be directly measured; however, the temperature of air inside the housing 210 has less influence on the sensing element.

Besides the housing 210, the sensor module 100 and the cover 220, the sensor package 200 may include other elements, such as connections and bezels, as long as a sensing zone 216 allows direct measurement of the relevant parameter.

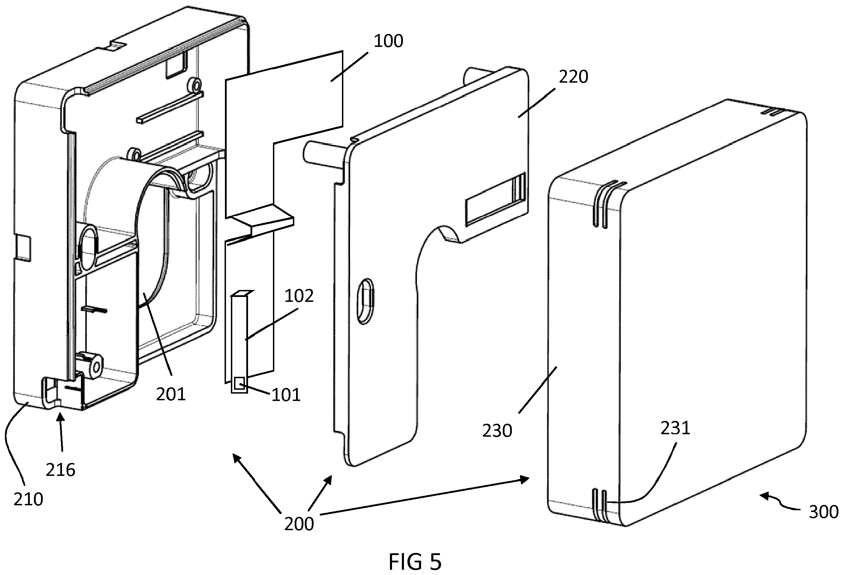

For example, FIG 5 shows an exploded view of a packaged sensor module 300. The sensor module 100 of FIG 1, which is shown very schematically in FIG 5 between the housing 210 and the cover 220, can be placed and fixed inside a package 200, which may provide structural support to the sensor module 100, as well as mechanical protection.

The package 200 includes several structural elements 210, 220, 230 for harboring the sensor module 100. In some embodiments, as shown in FIG 3 for example, the housing 210 harbors and provides structural support to the sensor module 100.

The housing 210 provides mechanical protection and insulation of the sensor module 100, optionally with the exception of the distal portion of the flexible substrate 102 including sensing element 101, being within the sensing zone 216.

In embodiments of the present invention, the cover 220 is included in the sensor package 200, for providing mechanical protection and protection against water, moisture, etc. to the sensor module 100. In some embodiments (not pictured), the cover 220 may include portions for providing fixation and structural support to at least some parts of the sensor module 100. The cover 220 may be adapted for being fixed to a wall, or to a housing 210, or to both.

In embodiments of the present invention, a bezel 230 can be added. A bezel may have a decorative function, and additionally it may also provide mechanical protection to the sensing element 101 in the sensing zone 216, while at the same time allowing it to be in direct contact with air at the location. In general, depending on the relevant parameter to be detected, the bezel 230 (and/or the housing 210 and/or the cover 220) may include different means for allowing the sensing element 101 to obtain measurements directly at the location. For example, in case of radiation (e.g. light) sensing, a window 231 in the bezel, or a window in the cover (not pictured), or in both, may include a screen for allowing the passage of radiation to be sensed, while at the same time providing mechanical protection to the device and specifically to the sensing element 101. For example, in case of temperature or humidity sensing, the bezel includes a window 231, for example one or more slits or holes so air from outside the sensor package 200 comes into contact with the sensing element 101. The bezel may include at least one hole, for example two or more, for example two holes of 2 mm width each, allowing proper circulation of air within the sensing zone.

The sensor package 200 may be wall mount box, and it can be secured to a wall by any suitable attaching means (screws, bolts, etc.), e.g. on the housing 210 and/or on the cover 220. The sensor package 200 may further include an output opening or outlet for bringing power from an external power source into the device sensor package 200, and/or for connecting the sensor module 100 to a further system such as an automation system or building management system or subsystem. Any connection (cable, preflex, etc.) can be provided directly into the sensor package 200, for example including a connection inlet 201 through the backside of the housing 210, for example in a portion of the housing 210 free of circuitry or active elements, for example in the middle thereof.

The sensor package 200 and its components can also be adapted to provide protection and electric insulation between the surroundings and the components inside the sensor package (sensing elements 101, substrates 114, 112, 103, electronic circuitry 110 and connections) where required. For example, the housing 210 and/or the cover 220 and/or the bezel 230 may comprise dielectric materials, grounding, and/or a Faraday cage, and/or these components may be sealed and waterproof, reducing or avoiding leaks in the electronic circuitry.

The combination of flexible materials and positioning improves the accuracy of the sensing element 101. Moreover, the flexible substrate 102 can be easily adapted so as to provide thermal insulation between the sensing element 101 and the circuitry 110 of the sensor module 100, by for example providing more distance between these elements, or by reducing thermal contact by design (less material between them, more freedom of design and contacts, even providing the electric contact separately).

In embodiments of the present invention, more than one sensing element may be included. Extra sensing elements may provide redundant measurements, by including more than one sensing element of the same type, or by including more than one sensing element of different types, but which sense the same parameter. In other embodiments, for example, different sensing elements may be included which measure different parameters, such as a temperature sensing element and an illumination sensing element. In other embodiments, a combination of redundant and different sensing elements may be provided. The sensor package 200 (e.g. housing 210 thereof) may include a separate compartment for each sensing element of the plurality, or some groups or even all of them may be included in one and the same compartment. Flexibility of the substrate reduces or avoids interference between different sensing elements at the same substrate, so each sensor does not affect the measurement of other nearby sensors. Some of these sensors may even be included in the "hot" compartment, as part of the heat-generating circuitry. For example, a radar sensor, gas sensor, etc. can be included there.

In a further aspect of the present invention, a sensor package 200 for a sensor module 100 is provided, including structural elements with features for providing a sensing zone 216 for a sensing element 101 provided on a flexible substrate 102, and optionally including additional features for increasing thermal insulation between the sensing element 101 and any heat-generating circuitry present in the sensor package 200.

FIG 6 shows a structural element of a sensor package 200, for example a housing 210, in accordance with embodiments of the present invention, delimiting a sensing zone 216 for harboring a sensing element 101 and holding means 217 for anchoring the sensing element 101, and optionally part of the flexible substrate 102 supporting the sensing element 101. The sensing element 101 can sense the relevant parameter directly in said sensing zone 216, because the sensing element 101 is in direct contact with the sample (e.g. air) that causes the sensing element 101 to react and generate a response. For example, the sensing zone 216 allows direct contact of the air at a location with a sensing element 101 for sensing temperature. The holding means 217 may be adapted so that the thermal conduction to the sensing element 101 is negligible or even non-existent.

In some embodiments, the structural element or elements of the sensor package 200 (e.g. the housing 210 of FIG 6) comprise resilient materials. The structural element may be formed as a single body, for example by molding a single plastics sheet. However, the structural element may include several attachable pieces, and/or other material such as ceramics, etc.

In embodiments of the present invention, the sensor package 200 may include an insulating barrier 214, which may include any suitable insulating material. The barrier 214 subdivides the sensor package 200 (e.g. the housing 210 thereof) in compartments 211, 212, which may thermally insulate heat-generating electronic circuitry 110 (confined in the "hot" compartment 211) from the rest of the elements of the sensor module 100.

In some embodiments, the subdivisions 211, 212 of the housing 210 may be separated by walls (thus obtaining different spaces for physically separating the part of the substrate including the sensing element 101 and the electronic circuitry 110), and the insulating barrier 214 may comprise a convection barrier 215 which for example blocks convection from the "hot" compartment 211 to the "cold" compartment 212. Such convection barrier 215 may include an air slot between two walls separated by a gap, forming an air-enclosing chamber 215. For example, the slot may be between 1 and 2 mm wide. For example, the gap may be as wide as each wall.

In some embodiments, the housing 210 may further include another subdivision for the connections and/or wiring between the sensing element 101 and the electronic circuitry 110.

In some embodiments, the flexible substrate 102 may be included in a further subdivision of the housing 210, but allowing connection between the flexible substrate 102 and other parts of the device (e.g. the rigid substrate).

The convection barrier 215 provides good insulation between at least the "cold" compartment 212 and the "hot" compartment 211, with no need to increase production costs. For example, the air slot may be provided directly by the shaping of the housing 210, e.g. by molding two walls including a gap between them, for example between the compartment including the sensing elements 101 and the compartment including the electronic circuitry 110. In embodiments of the present invention, connections 120 (e.g. a flatcable) may extend on top of the air slot, and may substantially close it, so a flow of air between the gap and the interior of the packaged sensor module 300 is reduced or avoided.

However, the present invention is not limited to a gap between two walls, and in some embodiments, the subdivisions can be obtained by providing an insulating buffer barrier including e.g. fiber insulating material between at least the electronic circuitry 110 and the sensing element 101.

In some embodiments, the housing 210 includes positioning and fixation features 213 for holding substrates, for example at least the intermediate sensor substrate 103. These features can function as anchoring features which can be adapted to minimize thermal conduction between the substrates and the housing walls, as already explained with reference to FIG 3.

The sensor package 200 may include other structural elements, such as a cover 220 for further protection, and a bezel 230 for decoration and protection of the sensing element 101. The sensing element 101 may be exposed, as it may not be completely enclosed by the housing 210 or the cover 220, so a bezel 230 may help protecting it from external damage. However, the bezel 230 may not prevent probing the location, as explained with reference to FIG 5.

Although the examples in the figures show the holding means 217 and the insulating barrier 214 included in the housing 210, the present invention is not limited to this configuration, and other configurations can be provided. For example, the holding means or the barrier, or both, may be included in other structural elements of the sensor package 200. For example, the cover may include holding means, and/or an insulating barrier, so the housing 210 provides only support to the cover 220 and, optionally, to the sensor module 100. However, including the holding means 217 and the insulating barrier 214 in the housing 210 facilitates the assembly and installation.

### Examples

The front and back view (left and right drawing of FIG 7, respectively) of a partially assembled packaged sensor module 300, comprising a sensor package 200 and a sensor module 100, in accordance with embodiments of the present invention is shown in FIG 7. The package 200 includes a housing 210 and a cover 220 enclosing the sensor module 100, of which only the sensing element 101 in the sensing zone 216 and contacts 115 to a power module are exposed. The package 200 may be a wall-mount sensor package. In the case illustrated, no wall box is provided. The cable or preflex comes out of the wall and enters the device substantially in the middle, for example via the inlet 201, the device can be mounted to the wall by two or three screws. The housing 210 may include screw holes 601 for fixation of the cover 220 to the housing 210. After fixation of the cover 220 to the housing 210, the wires coming out of the wall are connected to the contacts 115 and the decorative cover or bezel 230 can be installed. Lateral screw holes 600 may be used to fix the housing and cover to the wall before installing the bezel 230.

The size of the inlet 201 can be adapted to the type of sensor package 200 or application thereof. For example, the inlet 201 can be formed taking into account the use of two preflex Ø20. If 1 cable or preflex is used, the mounting holes in the wall can be on the same level as the cable. In other words, the cable may enter the product right in the center.

The wires may have any suitable size for fitting the connections of the sensor module 100. For example, wires of maximum 5 x 2.5mm² may be connected to standard contacts 115, for example on the separate substrate 114 of the powering elements 113.

Length and width of the housing 210, optionally with cover or bezel 230, may be 83 x 83 mm with a height of 21mm. Installation may be simple, by fixing the assembly of FIG 7 to the wall, inserting the wires in the connections provided in the housing 210 towards the electronic circuitry 110, and finally installing the bezel 230, which may be attached to the assembly by snapping tabs, hooks, bolts, etc.

In an exemplary sensor package 200, the assembly has a hot zone or compartment 211 and a cold zone or compartment 212, and in between them, an insulating barrier 214 to reduce convection (e.g. a convection barrier). The hot compartment 211 contains the power PCB 114, a gas sensor and other sensors, such as an occupancy sensor, a radar, etc. The cold compartment 211 contains the temperature sensor and a sensor of relative humidity (RH sensor). The rigid substrate in the 'cold' compartment 211 is held by the housing 210 by crash ribs with minimized are to minimize thermal conduction.

The temperature and RH sensors are placed on a flex print (flexible substrate 102), in a separate sensing zone 216. The flex print 102 will be coupled to connection 120 (e.g. a connector) on the rigid substrate in the 'cold' compartment. The bezel 230 has some ventilation holes (windows 231) in the sensing zone, so air can reach the temperature and RH sensor.

The same ventilation holes may be provided on the corners of the bezel 230 if the sensing zone 216 is in a corner of the housing 210, although they may be only functional on the side with sensors. In some embodiments, the holes may be used for gas sensing.

The flex print 102 will reduce heat conduction to the sensing element 101 (e.g. a temperature sensor) because of its low thermal conductivity. The flex print (flexible substrate 102) may only be held by a slot produced on a thin wall, which will be as thin as possible to reduce thermal conduction through the walls (for example, through the walls of the housing).

## Claims

1. A sensing system for a packaged sensor module (300), comprising a sensor module (100) comprising a flexible substrate (102) including at least one sensing element (101) for providing a signal as a response to a measurement of a parameter from a location, the sensor module (100) further comprising electronic circuitry (110) for processing said signal, the flexible substrate (102) being adapted to increase the length of a thermal path between the at least one sensing element (101) and the electronic circuitry (110), the sensing system further comprising a sensor package (200), the sensor package (200) including at least one structural element (210, 220) for housing the sensor module (100), the sensor package (200) comprising holding means (217) for holding the at least one sensing element (101) provided on the flexible substrate (102) in a fixed position in a sensing zone (216) so the location parameter can be directly sensed by the sensing element (101),
**characterized in that** the sensor package (200) comprises a thermally insulating barrier (214, 215) for separating a portion of the structural element (210, 220) adapted for housing the at least one sensing element (101) from a portion of the structural element (210, 220) adapted for housing the electronic circuitry (110).

2. The sensing system of the previous claim wherein the insulating barrier comprises a chamber (215) enclosing air.

3. The sensing system in accordance with any one of the previous claims wherein the chamber (215) is formed by two walls separated by a gap for blocking convection between the portions of the structural element (210, 220).

4. The sensing system in accordance with any one of the previous claims, wherein the holding means (217) for holding the at least one sensing element (101) on the flexible substrate (102) comprises a slot in a wall of the package (200) for holding the flexible substrate (102), for reducing heat transfer between the sensor package (200) and the thereby held flexible substrate (102).

5. The sensing system in accordance with any one of the previous claims, wherein the sensor package (200) further comprising a bezel (230) including a window (231) for allowing passage to the at least one sensing element (101).

6. The sensing system in accordance with any one of the previous claims, wherein the at least one structural element (210) is adapted for holding a sensor module (100), the at least one structural element (210) further comprising positioning and fixation features (213) for holding at least a rigid substrate of a sensor module, said features (213) adapted to reduce heat transfer between the rigid substrate and the housing (210).

7. The sensing system of any one of the previous claims assembled in a packaged sensor module (300),
wherein the holding means (217) holds the at least one sensing element (101) on the flexible substrate (102) in the sensing zone (216),
and wherein a portion of the structural element (210, 220) houses the at least one sensing element (101), and a different portion of the structural element (210, 220) houses the electronic circuitry (110), and wherein the insulating barrier (214, 215) separates the portion housing the at least one sensing element (101) from the portion holding the electronic circuitry (110).

8. The sensing system of any one of the previous claims, wherein the at least one sensing element (101) is a temperature sensing element.

9. The sensing system of any one of the previous claims, wherein the flexible substrate (102) is an elongated flexible substrate (102) including a narrow portion (107) for increasing the thermal insulation between the at least one sensing element (101) and the electronic circuitry (110).

10. The sensing system of any one of the previous claims, wherein the flexible substrate (102) has a thickness of about 0.2 mm.

11. The sensing system of any one of the previous claims, wherein the structural element is a housing (210) adapted for being attached to a constructional surface.

## Patentansprüche

1. Erfassungssystem für ein verpacktes Sensormodul (300), umfassend ein Sensormodul (100), umfassend ein flexibles Substrat (102) mit mindestens einem Erfassungselement (101) zum Abgeben eines Signals als Antwort auf eine Messung eines Parameters von einem Ort aus, wobei das Sensormodul (100) ferner eine elektronische Schaltung (110) zum Verarbeiten des Signals umfasst, wobei das flexible Substrat (102) dazu geeignet ist, die Länge eines Wärmewegs zwischen dem mindestens einen Erfassungselement (101) und der elektronischen Schaltung (110) zu erhöhen, wobei das Erfassungssystem ferner ein Sensorpaket (200) umfasst, wobei das Sensorpaket (200) mindestens ein Strukturelement (210, 220) zum Aufnehmen des Sensormoduls (100) enthält, wobei das Sensorpaket (200) ein Haltemittel (217) zum Halten des mindestens einen Erfassungselements (101) umfasst, das auf dem flexiblen Substrat (102) in einer festen Position in einer Erfassungszone (216) vorgesehen ist, so dass der Positionsparameter von dem Erfassungselement (101) direkt erfasst werden kann, **dadurch gekennzeichnet, dass** das Sensorpaket (200) eine wärmeisolierende Barriere (214, 215) zum Trennen eines Abschnitts des Strukturelements (210, 220), der zum Aufnehmen des mindestens einen Erfassungselements (101) angepasst ist, von einem Abschnitt des Strukturelements (210, 220), der zum Aufnehmen der elektronischen Schaltung (110) angepasst ist, umfasst.

2. Erfassungssystem nach dem vorhergehenden Anspruch, wobei die isolierende Barriere eine Kammer (215) umfasst, die Luft einschließt.

3. Erfassungssystem nach einem der vorhergehenden Ansprüche, wobei die Kammer (215) durch zwei Wände gebildet ist, die durch einen Spalt zum Blockieren der Konvektion zwischen den Abschnitten des Strukturelements (210, 220) getrennt sind.

4. Erfassungssystem nach einem der vorhergehenden Ansprüche, wobei das Haltemittel (217) zum Halten des mindestens einen Erfassungselements (101) auf dem flexiblen Substrat (102) einen Schlitz in einer Wand des Pakets (200) zum Halten des flexiblen Substrats (102) umfasst, um den Wärmeübergang zwischen dem Sensorpaket (200) und dem davon gehaltenen flexiblen Substrat (102) zu reduzieren.

5. Erfassungssystem nach einem der vorhergehenden Ansprüche, wobei das Sensorpaket (200) ferner eine Verkleidung (230) mit einem Fenster (231) umfasst, um den Durchgang zu dem mindestens einen Erfassungselement (101) zu ermöglichen.

6. Erfassungssystem nach einem der vorhergehenden Ansprüche, wobei das mindestens eine Strukturelement (210) zum Halten eines Sensormoduls (100) angepasst ist, wobei das mindestens eine Strukturelement (210) ferner Positionierungs- und Fixierungsmerkmale (213) zum Halten mindestens eines starren Substrats eines Sensormoduls umfasst, wobei die Merkmale (213) dazu angepasst sind, um den Wärmeübergang zwischen dem starren Substrat und dem Gehäuse (210) zu verringern.

7. Erfassungssystem nach einem der vorhergehenden Ansprüche, das in einem verpackten Sensormodul (300) zusammengebaut ist, wobei das Haltemittel (217) das mindestens eine Erfassungselement (101) auf dem flexiblen Substrat (102) in der Erfassungszone (216) hält und wobei ein Abschnitt des Strukturelements (210, 220) das mindestens eine Erfassungselement (101) aufnimmt und ein anderer Abschnitt des Strukturelements (210, 220) die elektronische Schaltung (110) aufnimmt und wobei die Isolationsbarriere (214, 215) den Abschnitt, in dem sich das mindestens eine Erfassungselement (101) befindet, von dem Abschnitt trennt, der die elektronische Schaltung (110) aufnimmt.

8. Erfassungssystem nach einem der vorhergehenden Ansprüche, wobei das mindestens eine Erfassungselement (101) ein Temperaturerfassungselement ist.

9. Erfassungssystem nach einem der vorhergehenden Ansprüche, wobei das flexible Substrat (102) ein längliches flexibles Substrat (102) ist, das einen schmalen Abschnitt (107) zum Erhöhen der Wärmeisolation zwischen dem mindestens einen Erfassungselement (101) und der elektronischen Schaltung (110) enthält.

10. Erfassungssystem nach einem der vorhergehenden Ansprüche, wobei das flexible Substrat (102) eine Dicke von etwa 0,2 mm aufweist.

11. Erfassungssystem nach einem der vorhergehenden Ansprüche, wobei das Strukturelement ein Gehäuse (210) ist, das zum Anbringen an einer Konstruktionsfläche angepasst ist.

## Revendications

1. Système de détection destiné à un module de capteur en boîtier (300), comprenant un module de capteur (100) comprenant un substrat flexible (102) comportant au moins un élément de détection (101) destiné à fournir un signal en réponse à une mesure d'un paramètre à partir d'un emplacement, le module de capteur (100) comprenant en outre des circuits électroniques (110) destinés à traiter ledit signal, le substrat flexible (102) étant conçu pour augmenter la longueur d'un chemin thermique entre l'au moins un élément de détection (101) et les circuits électroniques (110), le système de détection comprenant en outre un boîtier de capteur (200), le boîtier de capteur (200) comportant au moins un élément structural (210, 220) destiné à loger le module de capteur (100), le boîtier de capteur (200) comprenant un moyen de maintien (217) destiné à maintenir l'au moins un élément de détection (101) prévu sur le substrat flexible (102) dans une position fixe dans une zone de détection (216) de sorte que le paramètre d'emplacement peut être directement détecté par l'élément de détection (101), **caractérisé en ce que** le boîtier de capteur (200) comprend une barrière thermiquement isolante (214, 215) destinée à séparer une partie de l'élément structural (210, 220) conçue pour loger l'au moins un élément de détection (101) provenant d'une partie de l'élément structural (210, 220) conçue pour loger les circuits électroniques (110).

2. Système de détection selon la revendication précédente, dans lequel la barrière isolante comprend une chambre (215) renfermant de l'air.

3. Système de détection selon l'une quelconque des revendications précédentes, dans lequel la chambre (215) est formée par deux parois séparées par un espace destiné à bloquer la convection entre les parties de l'élément structural (210, 220).

4. Système de détection selon l'une quelconque des revendications précédentes, dans lequel le moyen de maintien (217) destiné à maintenir l'au moins un élément de détection (101) sur le substrat flexible (102) comprend une fente dans une paroi du boîtier (200) destinée à maintenir le substrat flexible (102), destinée à réduire le transfert de chaleur entre le boîtier de capteur (200) et le substrat flexible ainsi maintenu (102).

5. Système de détection selon l'une quelconque des revendications précédentes, dans lequel le boîtier de capteur (200) comprend en outre un encadrement (230) comportant une fenêtre (231) destinée à permettre le passage de l'au moins un élément de détection (101).

6. Système de détection selon l'une quelconque des revendications précédentes, dans lequel l'au moins un élément structural (210) est conçu pour maintenir un module de capteur (100), l'au moins un élément structural (210) comprenant en outre des caractéristiques de positionnement et de fixation (213) destinées à maintenir au moins un substrat rigide d'un module de capteur, lesdites caractéristiques (213) étant conçues pour réduire le transfert de chaleur entre le substrat rigide et le boîtier (210).

7. Système de détection selon l'une quelconque des revendications précédentes assemblé dans un module de capteur en boîtier (300), dans lequel le moyen de maintien (217) maintient l'au moins un élément de détection (101) sur le substrat flexible (102) dans la zone de détection (216) et une partie de l'élément structural (210, 220) logeant l'au moins un élément de détection (101) et une partie différente de l'élément structural (210, 220) logeant les circuits électroniques (110) et la barrière isolante (214, 215) séparant la partie logeant l'au moins un élément de détection (101) de la partie maintenant les circuits électroniques (110).

8. Système de détection selon l'une quelconque des revendications précédentes, dans lequel l'au moins un élément de détection (101) est un élément de détection de température.

9. Système de détection selon l'une quelconque des revendications précédentes, dans lequel le substrat flexible (102) est un substrat flexible allongé (102) comportant une partie étroite (107) destiné à augmenter l'isolation thermique entre l'au moins un élément de détection (101) et les circuits électroniques (110).

10. Système de détection selon l'une quelconque des revendications précédentes, dans lequel le substrat flexible (102) présente une épaisseur d'environ 0,2 mm.

11. Système de détection selon l'une quelconque des revendications précédentes, dans lequel l'élément structural est un boîtier (210) conçu pour être fixé à une surface de construction.
